Europäisches Patentamt

European Patent Office

Office européen des brevets

(19)

(11) **EP 0 776 554 B1**

(12) **FASCICULE DE BREVET EUROPEEN**

(45) Date de publication et mention
de la délivrance du brevet:
**21.10.1998 Bulletin 1998/43**

(21) Numéro de dépôt: **95926988.7**

(22) Date de dépôt: **28.07.1995**

(51) Int Cl.⁶: **H04B 10/155**

(86) Numéro de dépôt international:
**PCT/FR95/01018**

(87) Numéro de publication internationale:
**WO 96/06488 (29.02.1996 Gazette 1996/10)**

(54) **TETE D'EMISSION OPTIQUE AVEC LASER ET MODULATEUR**

OPTISCHER EMISSIONSKOPF MIT LASER UND MODULATOR

OPTICAL EMITTING HEAD INCLUDING A LASER AND A MODULATOR

(84) Etats contractants désignés:
**DE FR GB IT**

(30) Priorité: **19.08.1994 FR 9410153**

(43) Date de publication de la demande:
**04.06.1997 Bulletin 1997/23**

(73) Titulaire: **THOMSON-CSF**
**75008 Paris (FR)**

(72) Inventeurs:
• **HERGAULT, Stéphane**
 **F-92402 Courbevoie Cédex (FR)**
• **HARDY, Patrick**
 **F-92402 Courbevoie Cédex (FR)**

(74) Mandataire: **Ruellan-Lemonnier, Brigitte**
**THOMSON multimedia,**
**46 quai A. Le Gallo**
**92648 Boulogne Cédex (FR)**

(56) Documents cités:
**EP-A- 0 488 469      US-A- 5 166 509**

• **JOURNAL OF LIGHTWAVE TECHNOLOGY, vol. 11, no. 1, Janvier 1993 NEW YORK US, pages 82-104, XP 000377989 M.NAZARATHY ET AL. 'Progress in externally modulated AM CATV transmission systems'**
• **IEEE PHOTONICS TECHNOLOGY LETTERS, vol. 3, no. 7, Juillet 1991 NEW YORK US, pages 666-668, Y.S.TRISNO ET AL. 'Video multicast using a VSB-AM external modulator at 1.5 um'**
• **ONDE ELECTRIQUE, vol. 73, no. 4, Août 1993 PARIS FR, pages 44-52, XP 000381582 C.J.RICHARD ET AL. 'Transmission d'un signal multicanaux TV MA-BLR sur fibre optique monomode pour réseaux de vidéocommunication'**

## Description

L'invention concerne la transmission de signaux analogiques sur fibre optique et plus particulièrement l'association d'un laser à un modulateur optique pour réaliser celle-ci.

Cette association est généralement préférée à l'utilisation de lasers à modulation directe. En effet, concernant ce type de laser, la variation de courant générant la modulation d'amplitude influence la longueur d'onde d'émission et cette variation, même légère, liée à la dispersion chromatique de la fibre optique, dégrade les performances de la transmission.

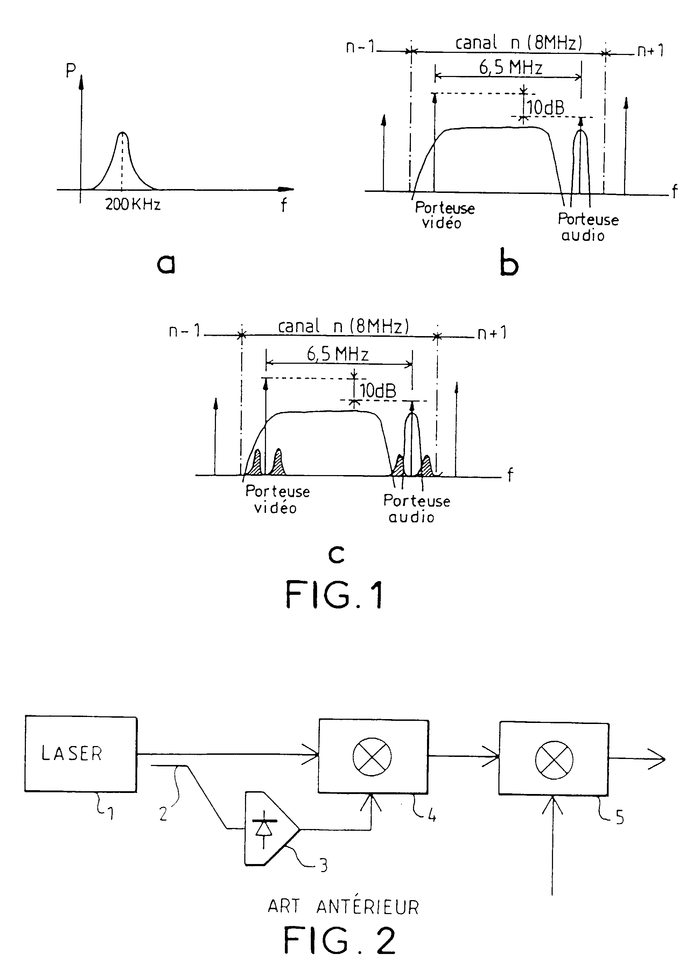

L'association d'un laser à un modulateur optique externe peut cependant présenter un autre inconvénient dû au bruit basse fréquence, appelé bruit de relaxation, généré par certains lasers, en particulier ceux utilisés dans les transmissions pour fibre optique. Ce bruit se traduit par une fluctuation de la puissance émise de l'ordre de quelques pourcents et correspond à un spectre étroit en bande basse. C'est ainsi le cas pour les lasers de type Verre-Erbium pour lesquels la fréquence centrale de ce spectre est voisine de 200 Khz. Ce bruit, représenté en figure 1a, est perturbant de la manière suivante :

L'entrée de modulation du modulateur optique reçoit un signal constitué d'une ou plusieurs porteuses, par exemple modulées en amplitude. Un exemple de ce signal, représenté en figure 1b, est constitué d'une porteuse audio et vidéo, le spectre de fréquence de la porteuse vidéo correspondant à une modulation en amplitude à bande latérale résiduelle appelée MA-BLR. Ces 2 porteuses modulées représentent un canal dans le domaine de transmissions de signaux de télévision , et le signal de modulation transmis au modulateur optique peut être constitué d'un ensemble de canaux adjacents pour constituer un multiplex fréquentiel multicanaux de signaux de télévision modulés en amplitude à bande latérale résiduelle. La multiplication du signal optique avec ce signal de modulation RF transpose le bruit du laser autour des porteuses du signal RF comme représenté en figure 1c. Ce bruit se retrouve dans les bandes de fréquence latérales si celles-ci ont une largeur supérieure à quelques dizaines de kilohertz comme c'est le cas pour le signal vidéo de modulation. Après démodulation, le signal vidéo en bande de base se trouve en présence de bruit de puissance double puisque les deux "raies" de bruit autour de la porteuse vidéo sont corrélées alors que le spectre du signal vidéo est à bande latérale réduite. Ce niveau de bruit dépasse alors le seuil de visibilité du signal vidéo sur l'écran d'une valeur pouvant atteindre 10 ou 12 dB, créant ainsi un effet de "crayonnage" sur l'image.

Une solution à ce problème, appelée "Feed Forward" par les Anglo-saxons, est connue par exemple du document : Progress in Externally Modulated AM CATV Transmission Systems, NAZARTHY et al., Journal of Lightwave Technology, vol. 11, January 1993 p. 82-105. Il s'agit d'insérer, entre le laser et le modulateur externe, un dispositif de régulation de la puissance émise. Ce dispositif est représenté en figure 2. Un coupleur 2 prélève une partie de la puissance en sortie du laser 1 pour la transmettre à un récepteur optique 3 avec amplificateur intégré qui convertit ce signal optique en un signal électrique qui va commander un premier modulateur optique externe 4 qui joue le rôle de régulateur.

Un choix adapté des valeurs de couplage et de gain du récepteur optique permet de réduire efficacement le bruit du laser avant que le faisceau ne soit transmis au second modulateur optique externe 5 recevant les signaux RF de modulation.

Un premier inconvénient à cette solution concerne les pertes d'insertion du coupleur et du modulateur optique de régulation qui réduisent fortement la puissance optique utilisable du laser, le modulateur optique, de par son principe, divisant la puissance par deux. D'autre part, sans tenir compte de ces pertes d'insertion, la puissance de sortie disponible de par le principe de régulation est au plus égale à la valeur minimum de la puissance fluctuante délivrée par le laser. Un autre inconvénient concerne la mise au point du dispositif, le gain de la chaîne de régulation symbolisée par le récepteur optique 3 devant être ajusté précisément, le signal de correction devant être parfaitement en phase avec le bruit à corriger. Enfin, le modulateur optique nécessaire à la régulation de puissance est d'un coût non négligeable.

L'invention a pour but de pallier les inconvénients précités.

Elle a pour objet une tête d'émission optique composée d'un laser émettant un signal de puissance lumineuse moyenne Po et de puissance instantanée Po (1+e), e étant la puissance de bruit superposée au signal et rapportée à la puissance moyenne Po, et d'un modulateur optique externe pour moduler le signal optique provenant du laser à partir d'un signal électrique de modulation M, caractérisée en ce que le signal de modulation M' appliqué directement au modulateur optique est un signal électrique proportionnel à M(1-e).

La présente invention permet de s'affranchir des inconvénients dus à la variation de la longueur d'onde du laser, par l'utilisation d'un modulateur optique externe au laser. Elle permet également de limiter les pertes d'insertion, comparée à un dispositif de régulation de puissance de type "Feed-Forward". De plus, son coût de réalisation et de mise en oeuvre est plus réduit.

Le signal de modulation effectif M' est produit à partir d'un modulateur électrique recevant un signal de modulation d'origine M et un signal de commande de modulation C. Le modulateur électrique peut fournir soit un signal proportionnel à CM, soit un signal de la forme K2CM + K3M K2 et K3 étant des constantes. Dans le premier cas le signal C doit être proportionnel à (1 - e) ; dans le second cas le signal C peut être proportionnel à e. Pour produire le signal C on prélève une partie de la puissance optique instantanée soit directement à la sortie du laser, soit à la sortie du modulateur optique.

Les caractéristiques et avantages de la présente invention ressortiront mieux de la description suivante, donnée à titre d'exemple et en référence aux figures annexées où :

- la figure 1a représente la puissance de bruit d'un laser de type Verre-Erbium.
- la figure 1b représente le spectre de fréquence d'un signal RF de modulation.
- la figure 1c représente le spectre de fréquence en sortie du modulateur optique.
- la figure 2 représente un dispositif de contrôle automatique de la puissance laser transmise, selon l'art antérieur.
- la figure 3 représente un dispositif de réduction de bruit d'un modulateur optique selon l'invention.
- la figure 4 représente une variante de ce dispositif.
- la figure 5 représente une réalisation pratique du dispositif.

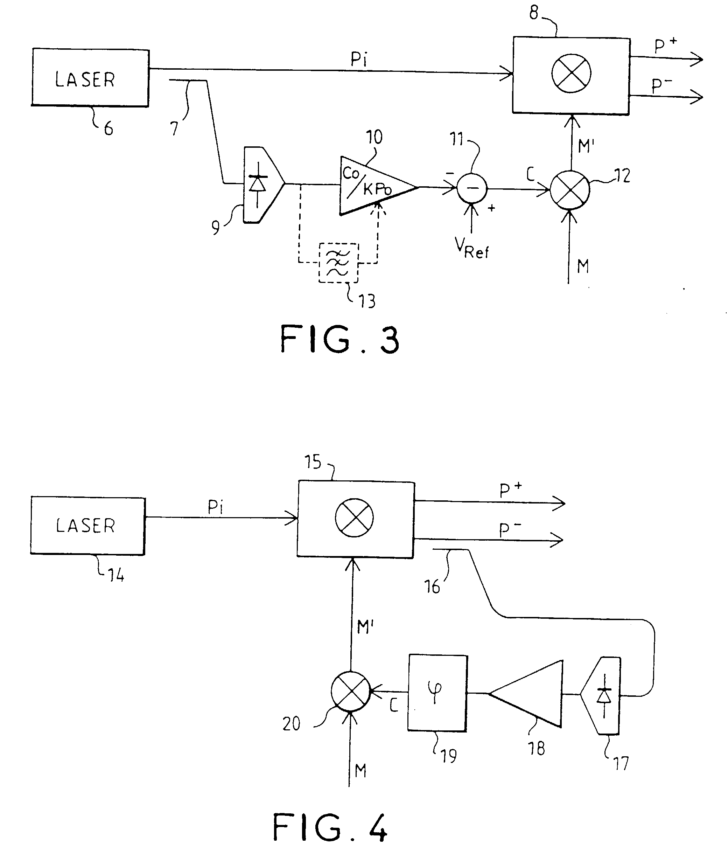

Le dispositif selon l'invention est représenté à la figure 3 et décrit ci-après .

Un laser 6, par exemple de type Verre-Erbium, est relié, par sa sortie, à un coupleur optique 7 permettant de prélever une faible proportion de la puissance optique émise par le laser. La sortie correspondant à la voie principale de ce coupleur est transmise directement, par l'intermédiaire d'une fibre optique, à l'entrée d'un modulateur optique 8 dont la fonction est de recevoir un signal électrique radiofréquence pour moduler la puissance optique en fonction de ce signal électrique. Dans ce qui suit on considérera qu'on souhaite obtenir en sortie du modulateur optique 8 une puissance optique Po(1/2 + M) sur une première sortie et Po (1/2 - M) sur une deuxième sortie; M représente le taux de modulation désiré, compris entre - 1/2 et + 1/2. Ce taux de modulation est représenté par les variations d'un signal radiofréquence appliqué au dispositif, signal qu'on désignera également par M.

La sortie correspondant à la voie couplée est reliée, toujours par l'intermédiaire d'une fibre optique, à un récepteur optique 9 qui transforme les signaux optiques en signaux électriques. Le signal électrique disponible en sortie du récepteur 9 est proportionnel à la puissance émise du laser Pi.

Si Po est la puissance moyenne émise par le laser et e la puissance de bruit relative à cette puissance moyenne, la puissance Pi émise par le laser est de la forme Po (1+e).

Ainsi le signal électrique en sortie du récepteur optique est égal à K $P_o$ (1+e), K étant une constante fonction du coefficient de couplage du coupleur optique 7, des pertes dans la fibre optique reliée au récepteur optique et du coefficient de transformation de la puissance optique en tension électrique du récepteur optique. Dans la suite on supposera que le récepteur fournit effectivement une tension et K est alors exprimé en volts/watts. On pourrait faire un raisonnement analogue si le récepteur fournissait un courant.

Ce signal est transmis à un amplificateur 10 de gain Co/KPo, Co étant une constante qu'on expliquera plus loin, puis à une première entrée d'un soustracteur 11, entrée soustraite à une tension appliquée sur la deuxième entrée et qui a pour valeur $V_{ref}$ = 2Co. L'ensemble du récepteur optique 9 et de l'amplificateur 10 a une bande passante telle qu'on conserve les fréquences de variations de puissance instantanée (quelques centaine de kHz par exemple). Le signal obtenu en sortie du soustracteur prend ainsi la valeur:

$$C = -\frac{Co}{KP_o} \times K\,P_o(1+e) + 2Co = (1-e)Co$$

La soustracteur 11 est aisément réalisé par application d'une tension d'offset à l'amplificateur 10.

Le signal C alimente l'entrée de modulation d'un modulateur électrique 12 de type multiplieur dont le signal à moduler M est transmis sur une deuxième entrée. Ce signal M est par exemple constitué de signaux radiofréquence RF de télévision multiplexés fréquentiellement, du type décrit à la figure 1b. Ce modulateur électrique réalise une modulation en amplitude du signal RF par le signal C = Co (1 - e) pour fournir un signal modulé M' de la forme :

$$M' = M\,(1-e)$$

Co est la valeur du signal C lorsque la puissance instantanée Pi est égale à la puissance moyenne Po et dans ce cas le signal de modulation effectif M' est égal au signal M représentant la modulation désirée.

Ce signal M' est transmis au modulateur optique 8 sur son entrée de modulation. Ce modulateur possède généralement 2 sorties optiques complémentaires, $P^+$ et $P^-$, chacune de puissance moitié de la puissance d'entrée pour une modulation nulle. En négligeant les pertes de couplage et de transmission sur la voie principale du coupleur 7, les sorties $P^+$ et $P^-$ ont pour valeur, en présence d'un signal de modulation M':

$$P^+ = P_i \left(\frac{1}{2}+M'\right)$$

$$P^- = P_i \left(\frac{1}{2}-M'\right)$$

et, en négligeant les termes du second ordre pour le bruit e petit devant l'unité :

$$P^+ = P_o\ (1+e)\left[\frac{1}{2}+M(1-e)\right] \cong P_o\left(\frac{1+e}{2}+M\right)$$

$$P^- \cong P_o\left(\frac{1+e}{2}-M\right)$$

Il n'y a plus de terme en M.e qui correspondent à un bruit dans la bande utile du signal de modulation.

Seul le bruit basse fréquence $\frac{P_o.e}{2}$ est présent en sortie, mais il est non perturbant vis à vis des porteuses RF puisqu'en dehors du spectre utile du signal de modulation. Le signal modulé n'est ainsi pratiquement plus affecté par le bruit du laser.

Ce dispositif suppose cependant que la puissance moyenne Po est fixe, le gain de l'amplificateur 10 étant calculé en fonction de Po. Dans le cas où cette valeur fluctue dans le temps, par exemple en fonction de la température ou du vieillissement du laser, une amélioration du dispositif consiste à mesurer cette puissance moyenne Po à partir d'un filtre passe-bas, éliminant les fluctuation de puissance instantanée, pour commander le gain de l'amplificateur 10 en fonction de cette valeur. Cette amélioration est représentée en pointillés sur la figure 3 et consiste à prélever le signal en sortie du récepteur optique 9 pour le faire traverser un filtre passe-bas 13, de fréquence de coupure par exemple de l'ordre du kiloherz pour éliminer le spectre du bruit, puis commander le gain de l'amplificateur 10 en reliant la sortie de ce filtré à l'entrée de commande de gain de l'amplificateur 10.

Le modulateur 12 fournit ici un signal M' = MC/Co. Dans le cas plus général où le modulateur est du type fournissant un signal M' = K2CM + K3M, K2 et K3 étant des constantes représentant l'une l'efficacité du modulateur et l'autre ses pertes d'insertion, on peut montrer qu'il faut donner au gain de l'amplificateur 10 une valeur $G=\frac{1}{K2KPo}$ et à la tension de référence Vref une valeur Vref = (2 - K3) / K2, pour que M' soit égal à M(1 - e).

Dans ce qui précède on a utilisé un soustracteur par suite de ce que le signal présent en sortie de l'amplificateur 10 est proportionnel à (1 + e). On pourrait aussi filtrer le signal foumi par le récepteur optique (en amont ou en aval de l'amplificateur 10) pour éliminer la composante continue KPo et ne garder que la composante de bruit K Po e. Cette composante de bruit peut être appliquée au modulateur électrique 12 pour fournir un signal M' = M(1 - e), en choisissant le gain de l'amplificateur 10 en fonction des coefficients K2 et K3 comme on montrera que c'est possible à propos de la figure 4.

D'autre part, l'ajustement de phase nécessaire entre le signal de bruit e contenu dans le signal laser à moduler et celui du signal de modulation M' est ici réalisé par adaptation de la longueur des fibres optiques ; mais un circuit déphaseur pourrait également être utilisé.

Ces dispositifs décrits nécessitent que la polarisation de l'onde optique soit maintenue entre le laser et le modulateur optique, les performances de ce dernier dépendant de ce maintien. En conséquence, le coupleur en sortie du laser et la fibre optique entre le coupleur et le modulateur doivent généralement être à maintien de polarisation.

Une variante des dispositifs décrits ci-dessus permet de s'affranchir de ce coupleur spécifique qui est d'un coût élevé. Elle permet également d'avoir une fibre optique entre laser et modulateur optique aussi courte que possible. Elle est décrite à la figure 4.

Un laser 14 est relié par fibre optique à un modulateur optique 15. Sur l'une des sorties $P^+$ ou $P^-$ de ce modulateur est branché un coupleur optique 16 qui récupère une petite partie du signal optique pour le transmettre, via une fibre optique branchée sur sa sortie couplée, à un récepteur optique 17 constitué d'un transducteur optoélectronique. Un amplificateur 18 relié en sa sortie amplifie et filtre le signal électrique. Cet amplificateur est relié à un déphaseur 19 dont la sortie fournit un signal de modulation C à un modulateur électrique 20. Ce modulateur 20 reçoit sur une deuxième entrée le signal M à moduler et fournit en sa sortie le signal modulé M' qui est envoyé sur l'entrée de modulation du modulateur optique 15.

L'amplificateur 18 extrait le bruit du laser e qui se trouve dans les fréquences basses et qui traverse le modulateur optique, pour moduler le signal M et fournir un nouveau signal de modulation M' de la forme M(1-e), un tel signal limitant la dégradation du signal modulant M par le bruit du laser comme indiqué précédemment.

Pour ce faire, les éléments constitutifs du dispositif satisfont les conditions calculées ci-après.

Le signal $P^-$ en sortie du modulateur optique est de la forme :

$$P^{-} = Po(1+e)(\frac{1}{2}-M')$$

Si $K_1$ est le coefficient de couplage du coupleur 16, $\eta$ le rendement ou coefficient de réponse en ampères/watt du récepteur optique 17 et $R_T$ la résistance de transfert calculée de l'amplificateur 18, la tension de sortie S de l'amplificateur a pour valeur :

$$S = K_1\eta R_T P^{-} = K_1\eta R_T P_o(1+e)(\frac{1}{2}-M')$$

(On suppose que le récepteur 17 fournit un courant mais le raisonnement serait analogue s'il fournissait une tension).

En fait la bande passante de l'amplificateur est telle que les signaux continus et les signaux à la fréquence de modulation sont éliminés, ce filtrage pouvant également être effectué par un filtre séparé. Le terme continu $K_1\eta R_T Po/2$ disparaît ; le terme proportionnel à M' représentant un signal radiofréquence disparaît également. En tenant compte de ce filtrage la sortie S de l'amplificateur 18 prend donc pour valeur :

$$S = \frac{K_1}{2} R_T P_o \eta e$$

Le modulateur électrique 20 fournit, quant à lui, un signal M' à partir d'un signal M à moduler et d'un signal de modulation C qui, d'une manière générale, peut être mis sous la forme :

$$M' = K_2\, CM + K_3 M$$

où $K_2$ représente l'efficacité du modulateur 20 et $K_3$ est lié aux pertes d'insertion du modulateur.

Si le signal C modulant le signal M est la tension S, alors le signal de modulation M' du modulateur optique 15 prend la valeur:

$$M' = K_2\, CM + K_3 M$$

$$= \frac{K_1}{2}K_2 R_T P_o \eta eM + K_3\, M$$

Pour que ce signal M' soit proportionnel à M (1-e) et plus particulièrement $K_3 M$ (1 - e), les différents coefficients satisfont la relation :

$$K_1\, K_2\, R_T\, P_o\, \eta = -2K_3$$

$$\frac{K_1 K_2}{K_3} = -\frac{2}{R_T P_o \eta}$$

Pour s'affranchir d'éventuelles variations de la puissance Po du laser, l'amplificateur 18 pourra être réalisé de manière à ce que sa résistance de transfert $R_T$ soit inversement proportionnelle à Po.

Le signal C correspond en fait au signal S après déphasage .

Le circuit de déphasage 19 permet de maintenir la condition de phase entre le signal de correction C transmis au modulateur électrique et le signal à corriger, c'est-à-dire un déphasage nul entre le signal de bruit e contenu dans le signal $P^{-}$ et le signal de correction C ; le déphaseur réalise un déphasage qui, associé à une inversion de phase dans le récepteur optique et au déphasage dû à la boucle, entraîne un déphasage de 360° au voisinage de la fréquence du pic du spectre de bruit de relaxation qui est un spectre étroit autour de 200 KHz dans le cas d'un laser de type Verre-Erbium. Le temps de retard dans la boucle est de l'ordre de 150 ns, ce qui correspond à un déphasage d'une dizaine de degrés pour un signal à la fréquence de 200 KHz. Ainsi le déphasage réalisé par le déphaseur 19 est de l'ordre de 170°.

Concernant le modulateur électrique 20, ce dernier doit être apériodique vis à vis du signal de modulation, c'est à dire que son action sur le signal RF ne doit pas dépendre de la fréquence RF.

De même qu'on l'a expliqué à propos de la figure 3 on pourrait utiliser dans la figure 4 un soustracteur si l'amplificateur 18 fournit un signal proportionnel à 1 + e, c'est-à-dire sans filtrer la composante continue et en ne filtrant que les fréquences du signal de modulation M'.

D'autre part et d'une manière plus générale, le choix d'un modulateur optique avec deux sorties complémentaires n'est pas indispensable pour la réalisation de l'invention, bien qu'il permette d'alimenter simultanément par exemple deux séries d'abonnés à un réseau de transmission optique par câble par l'exploitation simultanée de ces deux sorties.

Le couplage permettant d'alimenter le récepteur optique et le modulateur électrique peut, bien évidemment, être réalisé indifféremment sur l'une de ces deux sorties.

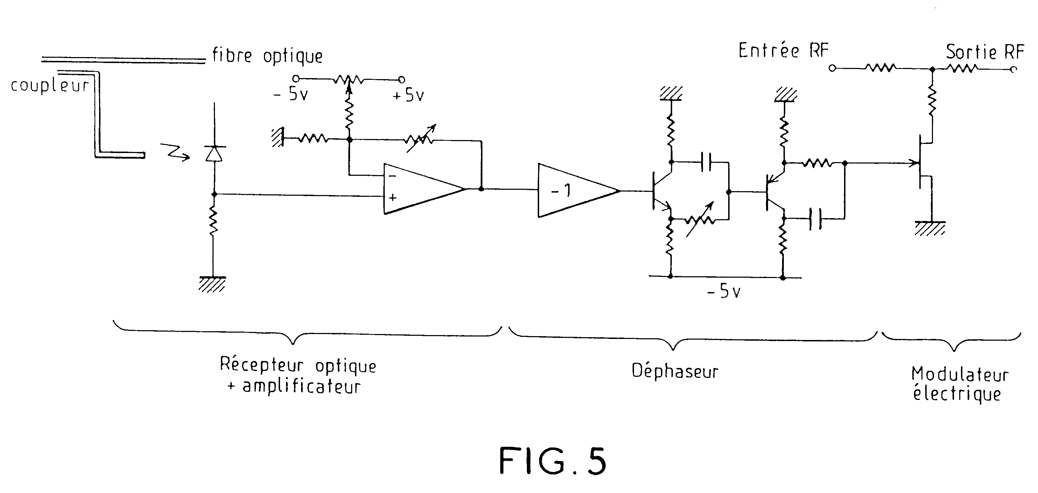

Un schéma pratique de la boucle de contre-réaction agissant sur le modulateur électrique du dispositif de la figure 4 est représenté en figure 5.

Elle est constituée successivement d'un récepteur optique + amplificateur recevant le signal optique provenant du coupleur optique et comportant une photodiode et un amplificateur avec résistance variable pour le réglage du gain de la boucle, d'un déphaseur comportant un circuit inverseur suivi de 2 circuits à transistors complémentaires avec résistance ajustable pour le réglage du déphasage souhaité puis d'un modulateur électrique constitué d'un transistor FET à arséniure de gallium agissant comme résistance variable. Le signal de modulation d'origine est transmis sur l'entrée RF et la sortie RF est reliée à l'entrée du modulateur optique.

## Revendications

1. Tête d'émission optique composée d'un laser (6,14) émettant un signal de puissance lumineuse moyenne Po et de puissance instantanée Po (1+e), e étant la puissance de bruit superposée au signal, rapportée à la puissance moyenne Po, et d'un modulateur optique externe (8,15) pour moduler le signal optique provenant du laser à partir d'un signal électrique de modulation M, caractérisée en ce que le signal de modulation M' appliqué directement au modulateur optique (8,15) est un signal électrique proportionnel à M (1-e).

2. Tête d'émission optique selon la revendication 1, caractérisée en ce que le signal de modulation M traverse, pour fournir le signal M', un modulateur électrique (12,20) dont l'entrée de modulation est alimentée par un signal électrique C réalisé à partir du signal optique et dont la sortie modulée M' est proportionnelle à CM.

3. Tête d'émission optique selon la revendication 1, caractérisée en ce que le signal de modulation M traverse, pour fournir le signal M', un modulateur électrique (12,20) dont l'entrée de modulation est alimentée par un signal électrique C réalisé à partir du signal optique et dont la sortie modulée M' est de la forme M' = $K_2$ CM+$K_3$ M, $K_2$ et $K_3$ étant des constantes.

4. Tête d'émission optique selon la revendication 3, caractérisée en ce que le signal électrique C est réalisé au moyen d'un coupleur optique (7) branché en sortie du laser (6) pour prélever un signal optique, d'un récepteur optique (9) pour transformer le signal optique prélevé en un signal électrique de telle manière que le signal obtenu est proportionnel à Po(1 + e), d'un filtre pour éliminer du signal électrique la composante continue, d'un amplificateur (10) de gain inversement proportionnel à Po pour amplifier le signal électrique avant ou après le filtrage.

5. Tête d'émission optique selon la revendication 2 ou 3, caractérisée en ce que le signal électrique C est réalisé au moyen d'un coupleur optique (7) branché en sortie du laser (6) pour prélever un signal optique, d'un récepteur optique (9) pour transformer le signal optique prélevé en un signal électrique de telle manière que le signal obtenu est proportionnel à Po(1+e), d'un amplificateur (10) de gain inversement proportionnel à Po pour amplifier le signal issu du récepteur optique (9) puis d'un soustracteur (11) pour soustraire ce signal amplifié à une valeur de référence.

6. Tête d'émission optique selon la revendication 2 ou 3, caractérisée en ce que le signal électrique de modulation C est réalisé au moyen d'un coupleur optique (16) branché en sortie du modulateur optique (15) pour prélever un signal optique, d'un récepteur optique (17) pour transformer le signal optique prélevé en un signal électrique, d'un filtre pour extraire du signal électrique la composante en Po (1+e) en éliminant les composantes aux fréquences de modulation et au dessus, d'un amplificateur de gain inversement proportionnel à Po pour amplifier ce signal avant ou après le filtrage puis d'un soustracteur pour soustraire ce signal amplifié et filtré à une valeur de référence.

7. Tête d'émission optique selon la revendication 3, caractérisée en ce que le signal électrique de modulation C est réalisé au moyen d'un coupleur optique (16) branché en sortie du modulateur optique (15) pour prélever un signal optique, d'un récepteur optique (17) pour transformer le signal optique prélevé en un signal électrique, d'un filtre pour éliminer du signal électrique les composantes aux fréquences de modulation et au-dessus et la composante continue, d'un amplificateur de gain inversement proportionnel à Po pour amplifier le signal électrique obtenu avant ou après filtrage.

8. Tête d'émission optique selon la revendication 4, 5, 6 ou 7 caractérisée, en ce que le gain de l'amplificateur (10) est commandé à partir du signal de sortie d'un filtre passe-bas (13) branché en parallèle sur la sortie du récepteur optique (9) et de fréquence de coupure telle que les fréquences de bruit correspondant au signal e sont éliminées pour fournir une sortie proportionnelle à la puissance moyenne du laser Po.

9. Tête d'émission optique selon la revendication 7, caractérisée en ce que le signal électrique de modulation C est réalisé au moyen d'un coupleur optique (16) de coefficient de couplage $K_1$ branché en sortie du modulateur optique (15) pour prélever un signal optique, d'un récepteur optique (17) de rendement $\eta$ relié à un amplificateur avec filtrage (18) de résistance de transfert $R_T$ pour transformer le signal optique issu de la sortie couplée du coupleur optique (16) en un signal électrique puis l'amplifier et le filtrer de manière à supprimer la composante continue et les composantes aux fréquences de modulation du signal prélevé pour ne conserver que le signal de bruit aux fréquences basses, le coupleur (16), le récepteur optique (17), l'amplificateur (18) et le modulateur électrique (20) satisfaisant à la relation

$$\frac{K_1 K_2}{K_3} = -\frac{2}{R_T P_o \eta}$$

10. Tête d'émission optique selon les revendications 4, 5, 6, 7, 8 ou 9, caractérisée en ce qu'un déphaseur (19) est interposé entre la sortie du récepteur optique (9,17) et l'entrée de modulation du modulateur électrique (12, 20) pour réaliser un déphasage tel que les composantes bruit du signal de modulation M' et du signal optique en entrée du modulateur optique (15) sont en opposition de phase.

**Patentansprüche**

1. Optischer Emissionskopf mit einem Laser (6, 14), der ein Signal mit der mittleren Lichtleistung Po und der momentanen Leistung Po (1+e) aussendet, wobei e die dem Signal überlagerte Rauschleistung ist, bezogen auf die mittlere Leistung Po, und mit einem externen optischen Modulator (8, 15) zum Modulieren des von dem Laser aufgrund eines elektrischen Modulationssignals M gelieferten optischen Signals, dadurch gekennzeichnet, daß das dem optischen Modulator (8, 15) unmittelbar zugeführte Modulationssignal F' ein zu M(1-e) proportionales elektrisches Signal ist.

2. Optischer Emissionskopf nach Anspruch 1, dadurch gekennzeichnet, daß das Modulationssignal M zur Bildung des Signals M' über einen elektrischen Modulator (12, 20) geführt ist, dessem Modulationseingang ein elektrisches Signal C zugeführt ist, das aus dem optischen Signal gewonnen ist und dessen modulierte Ausgangsspannung M' proportional zu CM ist.

3. Optischer Emissionskopf nach Anspruch 1, dadurch gekennzeichnet, daß das Modulationssignal M zur Bildung des Signals M' über einen elektrischen Modulator (12, 20) geführt ist, dessem Modulationseingang ein aus dem optischen Signal gewonnenes elektrisches Signal C zugeführt ist und dessen modulierte Ausgangsspannung M' die Form $M' = K_2\, CM + K_3\, M$ hat, wobei $K_2$ und $K_3$ Konstanten sind.

4. Optischer Emissionskopf nach Anspruch 3, dadurch gekennzeichnet, daß das elektrische Signal C mittels eines optischen Koppelgliedes (7) gebildet wird, das an den Ausgang des Lasers (6) angeschlossen ist, um dem optischen Empfänger (9) ein optisches Signal zu entnehmen und dieses entnommene optische Signal in ein elektrisches Signal umzusetzen, derart, daß das gewonnene Signal proportional zu Po (1+e) ist, sowie mit einem Filter zur Beseitigung der Gleichspannungskomponente in dem elektrischen Signal und mit einem Verstärker (10) mit einer zu Po umgekehrt proportionalen Verstärkung zur Verstärkung des elektrischen Signals vor oder nach der Filterung.

5. Optischer Emissionskopf nach Anspruch 2 oder 3, dadurch gekennzeichnet, daß das elektrische Signal C mittels

**EP 0 776 554 B1**

eines an den Ausgang des Lasers (6) angeschlossenen optischen Koppelelementes (7) zur Entnahme eines optischen Signals gewonnen ist, sowie mit einem optischen Empfänger (9) zum Umsetzen des entnommenen optischen Signal in ein elektrisches Signal, derart, daß das gewonnene Signal proportional zu Po (1+e) ist, und mit einem Verstärker (10) mit einer zu Po umgekehrt proportionalen Verstärkung zum Verstärken des Signals von dem optischen Empfänger (9) und mit einer Subtrahierstufe (11) zum Subtrahieren des verstärkten Signals von einem Referenzwert.

6. Optischer Emissionskopf nach Anspruch 2 oder 3, dadurch gekennzeichnet, daß das elektrische Modulationssignal C durch ein optisches Koppelelement (16) gewonnen wird, das an den Ausgang des optischen Modulators (15) angeschlossen ist, um ein optisches Signal zu entnehmen, sowie mit einem optischen Empfänger (17) zum Umsetzen des entnommenen optischen Signals in ein elektrisches Signal, und mit einem Filter zum Extrahieren der Komponente Po (1+e) aus dem elektrischen Signal und zum Unterdrücken der Komponenten bei den Modulationsfrequenzen und mit einem Verstärker mit einer zu Po umgekehrt proportionalen Verstärkung zur Verstärkung des Signals vor oder nach der Filterung und schließlich mit einer Subtrahierstufe zum Subtrahieren dieses verstärkten und gefilterten Signals von einem Referenzwert.

7. Optischer Emissionskopf nach Anspruch 3, dadurch gekennzeichnet, daß das elektrische Modulationssignal C mittels eines optischen Kopplungselementes (16), das an den Ausgang des optischen Modulators (15) zur Entnahme eines optischen Signals angeschlossen ist, mittels eines optischen Empfängers (17) zum Umsetzen des entnommenen optischen Signals in ein elektrisches Signal, mittels eines Filters zum Unterdrücken der Komponenten mit den Modulationsfrequenzen in dem elektrischen Signal und der Gleichspannungskomponente und mittels eines Verstärkers mit einer zu Po umgekehrt proportionalen Verstärkung zur Verstärkung des gewonnenen elektrischen Signals vor oder nach der Filterung erzeugt wird.

8. Optischer Emissionskopf nach Anspruch 4, 5, 6 oder 7, dadurch gekennzeichnet, daß die Verstärkung des Verstärkers (10) durch das Ausgangssignal eines Tiefpaßfilters (13) gesteuert wird, das parallel zum Ausgang des optischen Empfäners (9) liegt und eine derartige Grenzfrequenz hat, daß die dem Signal e entsprechenden Frequenzen des Rauschens unterdrückt werden, um eine der mittleren Leistung Po des Lasers proportionale Ausgangsspannung zu erzeugen.

9. Optischer Emissionskopf nach Anspruch 7, dadurch gekennzeichnet, daß das elektrische Modulationssignal C mittels eines optischen Koppelelementes (16) mit einem Kopplungsfaktor $K_1$, das an den Ausgang des optischen Modulators (15) zur Entnahme eines optischen Signals angeschlossen ist, und mittels eines optischen Empfängers (17) mit dem Wirkungsgrad h, der mit einem Verstärker (18) mit Filterung mit dem Übertragungswiderstand $R_T$ zur Umsetzung des optischen Signals von dem Koppelausgang des optischen Koppelelementes (16) in ein elektrisches Signal verbunden ist, erzeugt wird, wobei der Verstärker und das Filter so ausgebildet sind, daß die Gleichspannungskomponente und die Komponenten der Frequenzen des entnommenen Modulationssignals unterdrückt werden, um nur das Rauschsignal bei diesen Frequenzen zu erhalten, wobei das Koppelement (16), der optische Empfänger (17), der Verstärker (18) und der elektrische Modulator (20) folgende Gleichung erfüllen:

$$\frac{K_1 K_2}{K_3} = -\frac{2}{R_T P_o \eta}$$

10. Optischer Emissionskopf nach den Ansprüchen 4, 5, 6, 7, 8 oder 9, dadurch gekennzeichent, daß ein Phasenschieber (19) zwischen dem Ausgang des optischen Empfängers (9, 17) und dem Modulationseingang des elektrischen Modulators (12, 20) liegt, um eine solche Phasenschiebung zu bilden, daß die Rauschkomponenten des Modulationssignals M' und des optischen Signals am Eingang des optischen Modulators (15) entgegengesetzte Phase haben.

## Claims

1. Optical emission head composed of a laser (6,14) emitting a signal with mean luminous power Po and instantaneous power Po(1+e), e being the noise power superimposed on the signal, referred to the mean power Po, and of an external optical modulator (8,15) for modulating the optical signal originating from the laser on the basis of a modulating electrical signal M, characterized in that the modulating signal M' applied directly to the optical modulator (8,15) is an electrical signal proportional to M(1-e).

2. Optical emission head according to Claim 1, characterized in that the modulating signal M passes through, so as to yield the signal M', an electrical modulator (12,20) whose modulating input is fed with an electrical signal C constructed from the optical signal and whose modulated output M' is proportional to CM.

3. Optical emission head according to Claim 1, characterized in that the modulating signal M passes through, so as to yield the signal M', an electrical modulator (12,20) whose modulating input is fed with an electrical signal C constructed from the optical signal and whose modulated output M' is of the form M' = $K_2CM+K_3M$, $K_2$ and $K_3$ being constants.

4. Optical emission head according to Claim 3, characterized in that the electrical signal C is constructed by means of an optical coupler (7) connected to the output of the laser (6) for tapping off an optical signal, of an optical receiver (9) for transforming the tapped-off optical signal into an electrical signal in such a way that the signal obtained is proportional to Po(1 + e), of a filter for eliminating the DC component from the electrical signal, of an amplifier (10) with gain inversely proportional to Po for amplifying the electrical signal before or after filtering.

5. Optical emission head according to Claim 2 or 3, characterized in that the electrical signal C is constructed by means of an optical coupler (7) connected to the output of the laser (6) for tapping off an optical signal, of an optical receiver (9) for transforming the tapped-off optical signal into an electrical signal in such a way that the signal obtained is proportional to Po(1 + e), of an amplifier (10) with gain inversely proportional to Po for amplifying the signal from the optical receiver (9) and then of a subtractor (11) for subtracting this amplified signal from a reference value.

6. Optical emission head according to Claim 2 or 3, characterized in that the electrical modulating signal C is constructed by means of an optical coupler (16) connected to the output of the optical modulator (15) for tapping off an optical signal, of an optical receiver (17) for transforming the tapped-off optical signal into an electrical signal, of a filter for extracting the Po(1+e) component from the electrical signal by eliminating the components at the modulating and higher frequencies, of an amplifier with gain inversely proportional to Po for amplifying the electrical signal before or after filtering and then of a subtractor for subtracting this amplified and filtered signal from a reference value.

7. Optical emission head according to Claim 3, characterized in that the electrical modulating signal C is constructed by means of an optical coupler (16) connected to the output of the optical modulator (15) for tapping off an optical signal, of an optical receiver (17) for transforming the tapped-off optical signal into an electrical signal, of a filter for eliminating the components at the modulating and higher frequencies and the DC component from the electrical signal, of an amplifier with gain inversely proportional to Po for amplifying the electrical signal before or after filtering.

8. Optical emission head according to Claim 4, 5, 6 or 7, characterized in that the gain of the amplifier (10) is controlled on the basis of the output signal from a low-pass filter (13) connected in parallel with the output of the optical receiver (9) and with cutoff frequency such that the noise frequencies corresponding to the signal e are eliminated so as to yield an output proportional to the mean power of the laser Po.

9. Optical emission head according to Claim 7, characterized in that the electrical modulating signal C is constructed by means of an optical coupler (16) with coupling coefficient $K_1$ connected to the output of the optical modulator (15) for tapping off an optical signal, of an optical receiver (17) with efficiency η linked to a with-filtering amplifier (18) with transistance $R_T$ for transforming the optical signal from the coupled output of the optical coupler (16) into an electrical signal and then amplifying it and filtering it in such a way as to suppress the DC component and the components at the modulating frequencies of the tapped-off signal so as to retain only the noise signal at the low frequencies, the coupler (16), the optical receiver (17), the amplifier (18) and the electrical modulator (20) satisfying the relation

$$\frac{K_1 K_2}{K_3} = -\frac{2}{R_T P_o \eta}$$

10. Optical emission head according to Claims 4, 5, 6, 7, 8 or 9, characterized in that a phase shifter (19) is interposed between the output of the optical receiver (9,17) and the modulating input of the electrical modulator (12,20) in order to produce a phase shift such that the noise components of the modulating signal M' and of the optical signal at the input of the optical modulator (15) are in phase opposition.

FIG.1

ART ANTÉRIEUR

FIG. 2

FIG. 3

FIG. 4

FIG.5

coupleur

fibre optique

−5v  +5v

Entrée RF  Sortie RF

−1

−5v

Récepteur optique
+ amplificateur

Déphaseur

Modulateur
électrique

EP 0 776 554 B1

12